# EUROPÄISCHE PATENTSCHRIFT

(11) **EP 1 278 666 B1**
(45) Veröffentlichungstag und Bekanntmachung des Hinweises auf die Patenterteilung: **20.07.2005**
(21) Anmeldenummer: 01923504.3
(22) Anmeldetag: 10.02.2001
(51) Int. Cl.: B60S 1/38

(54) **WISCHBLATT FÜR SCHEIBEN INSBESONDERE VON KRAFTFAHRZEUGEN**
WIPER BLADE FOR GLAZED SURFACES, ESPECIALLY GLAZED SURFACES IN MOTOR VEHICLES
BALAI D'ESSUIE-GLACE POUR DES VITRES, EN PARTICULIER DE VEHICULES A MOTEUR

(30) Priorität: 23.02.2000 DE 10008271; 25.05.2000 DE 10025710
(43) Veröffentlichungstag der Anmeldung: 29.01.2003
(73) Patentinhaber: ROBERT BOSCH GMBH, 70442 Stuttgart (DE)
(72) Erfinder: DE BLOCK, Peter, B-3545 Halen (BE); WIJNANTS, Peter, B-3111 Wezemaal (BE)
(86) Internationale Anmeldenummer: PCT/DE2001/000513
(87) Internationale Veröffentlichungsnummer: WO 2001/062559

(56) Entgegenhaltungen:
- DE-A- 19 627 115
- DE-B- 1 028 896
- GB-A- 2 036 547

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des von einem mit dem Wischblatt verbundenen Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Wischbetrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten losen Federschienen, wie sie bei herkömmlichen Wischblättern praktiziert wird (DE-A-1 505 397).

Die Erfindung geht aus von einem Wischblatt nach dem Oberbegriff des Anspruchs 1. Bei einem bekannten Wischblatt dieser Art (DE-GM-Schrift 29611722.6) sind die beiden Federschienen durch an ihren beiden Enden angeordnete Querstege einstückig miteinander verbunden. Da sich diese Querstege in der Ebene der Federschienen befinden muß der zwischen den einander zugewandten Längskanten liegende von den Federschienen und den Querstegen umschlossene Schlitz in seinem einem Endabschnitt so erweitert werden, dass eine ordnungsgemäße Montage der Wischleiste im Schlitz möglich ist. Diese Montageerweiterung kann jedoch die Federeigenschaften des Tragelements im Hinblick auf das anzustrebende Wischergebnis nachteilig verändern. Auch ist das manuelle Einfädeln der Wischleiste über diese Erweiterung in den Schlitz kostenintensiv. Darüber hinaus muß die Wischleiste des bekannten Wischblatts kürzer sein als die Federschiene, deren beiden an ihren Enden angeordnete Stege außerhalb der Wischleiste liegen. Dadurch kann die durch die Wischleistenlänge bestimmte Höhe des Wischfeldes nicht immer maximal ausgelegt werden, weil die über die Wischleistenenden ragenden Querstege beachtet werden müssen.

Mit der gattungsbildenden DE 10 28 896 B ist ein Wischblatt bekannt geworden, bei dem in Schlitze einer Wischleiste Längsfedern eingelegt sind, die an den Schienenenden durch Klammern zusammen gehalten sind. Dies bedingt aber, dass die Längsschienen, die Klammern und die Wischleiste vor der Montage als Einzelteile vorliegen und erst mit dem Verklammern ein Verbund entsteht.

### Vorteile der Erfindung

Neben erheblichen Vorteilen bei der Auslegung des Tragelements hinsichtlich dessen Federeigenschaften und der besonders einfachen, kostengünstigen Montage der Wischleiste am Tragelement - die Wischleiste kann von einem der beiden offenen Längsenden des Tragelements zwischen dessen Federschienen eingeschoben werden, wobei die brückenartigen Querstege diesen Montagevorgang nicht behindern - kann nun auch die Länge des Tragelements der Länge der Wischleiste angepasst werden. Bei der Festlegung der Höhe des Wischfeldes und auch bei der Bestimmung des Abstandes zwischen dem fahrerseitigen und dem beifahrerseitigen Scheibenwischer beziehungsweise des Abstandes der bei Pendelwischanlagen vorhandenen beiden Wischerwellen müssen keine über die Wischleiste ragenden Tragelement-Querstege berücksichtigt werden.

Eine problemlose Montage des Wischblatts ist gewährleistet, wenn die Haltemittel nach dem Positionierung der Wischleiste an dem Tragelement in ihre Sicherungsposition bringbar sind.

Eine einfache kostengünstige Formgebung der Federschienen ist möglich, wenn die Haltemittel an einem der Querstege angeordnet sind.

Eine freie Anpassung der Wischleiste während des Wischbetriebs an die sich stetig ändernde Scheibenkrümmung ist möglich, wenn die Haltemittel an einem Quersteg angeordnet sind, der sich im Bereich eines der Endabschnitte der beiden Federschienen befindet.

Damit die Haltemittel die Einschubbahn für die Wischleiste nicht beeinträchtigen, weisen die Haltemittel einen zungenartigen Fortsatz auf, welcher sich vom Mittelabschnitt des einen Querstegs aus zum anderen Endabschnitt der beiden Federschienen erstrecken.

Wenn weiter der zungenartige Fortsatz mit Fixiermittel an einem unsensiblen Bereich der Wischleiste, beispielsweise an einer Deckleiste der Wischleiste angreift, welche sich oberhalb der beiden Längsnuten und auch oberhalb der oberen Bandflächen der Federschienen befindet, ergibt sich durch die Fixierung keine Beeinträchtigung der Wischqualität.

Dies lässt sich auf besonders einfache Weise realisieren, wenn der zungenartige Fortsatz als Fixiermittel wenigstens einen zur Deckleiste der Wischleiste gerichteten Vorsprung hat.

Eine sichere Verankerung der Wischleiste an dem Tragelement ist erreicht, wenn der Vorsprung an seinem freien Ende schneidenartig ausgebildet ist.

Bei bestimmten Anwendungsfällen kann es von Vorteil sein, wenn als Fixiermittel an dem zungenartigen Fortsatz mehrere zur Rückenleiste gerichtete Vorsprünge angeordnet sind.

Eine stabile und dauerhafte Verankerung der Wischleiste an dem Tragelement wird erreicht, wenn sowohl die Querstege als auch der mit einem der Querstege einstückig verbundene zungenartige Fortsatz aus Metall gefertigt sind.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

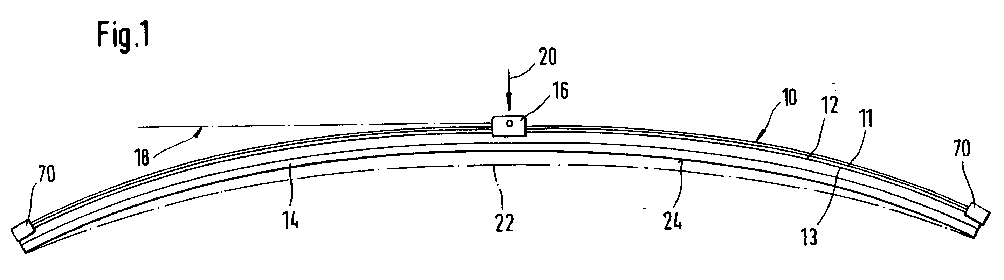

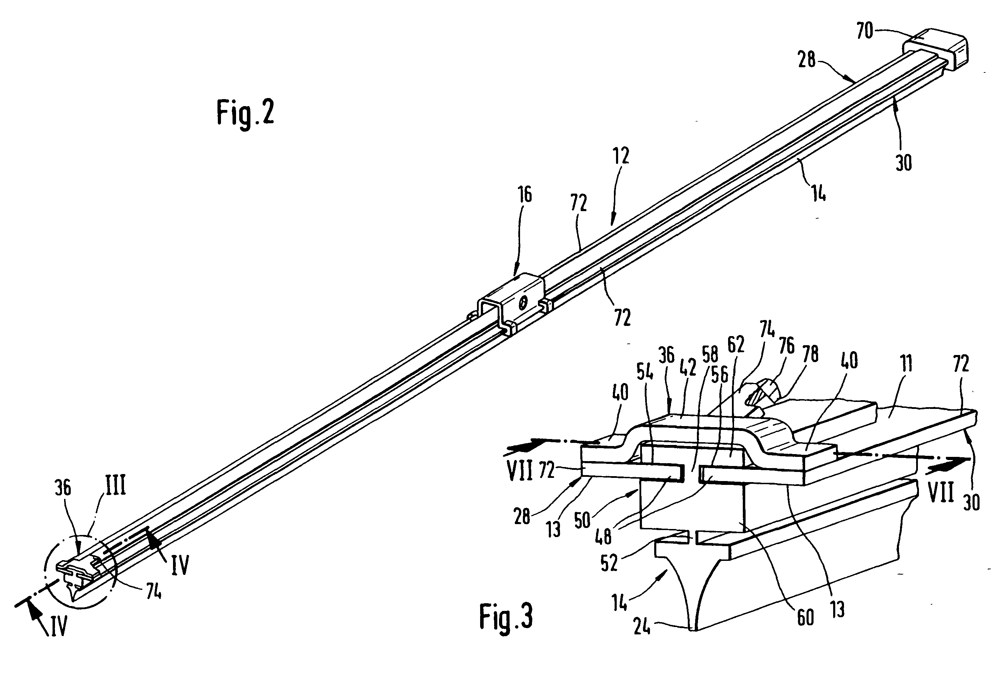

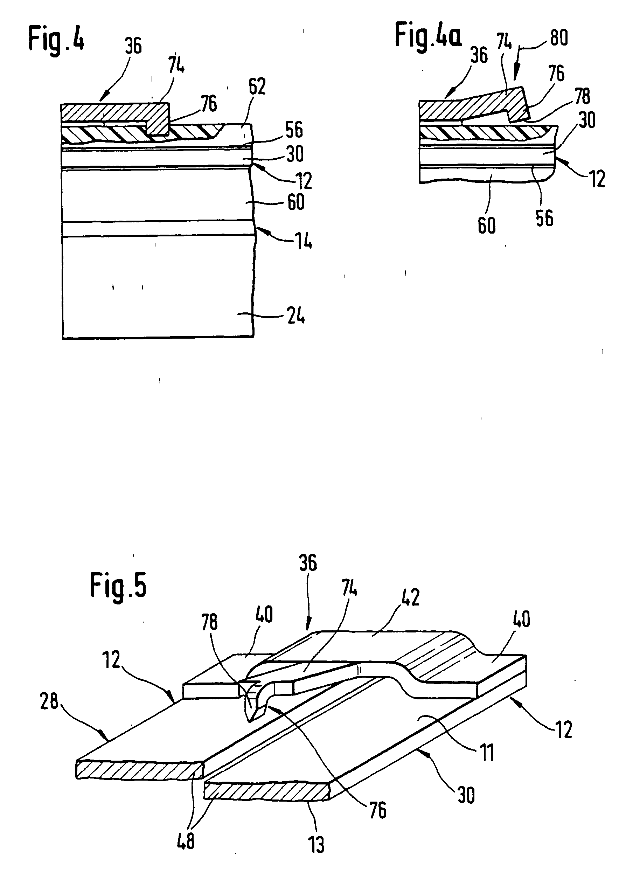

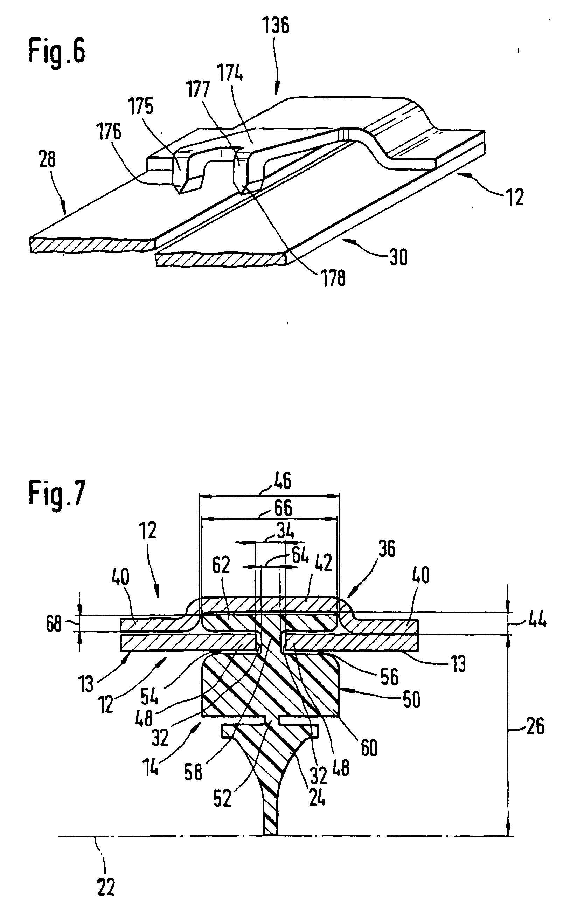

In der Zeichnung zeigen: Figur 1 eine Seitenansicht eines erfindungsgemäßen Wischblatts, Figur 2 eine gestreckte Darstellung des Wischblatts gemäß Figur 1 unmaßstäblich und perspektivisch gezeichnet, wobei eine von an den Wischblattenden angeordneten Abdeckkappen entfernt ist, Figur 3 eine in Figur 2 mit III bezeichneten Einzelheit vergrößert dargestellt, Figur 4 einen Teillängsschnitt durch das Wischblatt gemäß Figur 2 entlang der Linie IV-IV in vergrößerter Darstellung, Figur 4a die Anordnung gemäß Figur 4 in einer Zwischen-Montagestellung, Figur 5 den in Figur 3 gezeigten Endabschnitt des zum Wischblatt gehörenden Tragelements um 180° Grad gedreht gezeichnet, Figur 6 die Anordnung gemäß Figur 5 bei einer anderen Ausführungsform der Erfindung und Figur 7 die Schnittfläche eines Schnitts durch die Einzelheit gemäß Figur 3 entlang der Linie VII-VII.

### Beschreibung der Ausführungsbeispiele

Ein in den Figuren 1 und 2 gezeigtes Wischblatt 10 weist ein bandartig langgestrecktes, federelastisches Tragelement 12 auf, an dessen Unterseite 13 eine langgestreckte, gummielastische Wischleiste 14 längsachsenparallel angeordnet ist. An der Oberseite 11 des auch als Federbalken zu bezeichneten Tragelements 12 ist in dessen Mittelabschnitt das wischblattseitige Teil 16 einer Anschlußvorrichtung direkt angeordnet, mit deren Hilfe das Wischblatt 10 gelenkig mit einem in Figur 1 strichpunktiert angedeuteten, angetriebenen Wischerarm 18 lösbar verbunden werden kann. Dazu ist der Wischerarm 18 an seinem freien Ende mit dem wischerarmseitigen Teil der Anschlußvorrichtung versehen. Der Wischerarm 18 ist in Richtung des Pfeiles 20 zur zu wischenden Scheibe - beispielsweise zur Windschutzscheibe eines Kraftfahrzeuges - belastet, deren zu wischende Oberfläche in Figur 1 durch ein strichpunktierte Linie 22 angedeutet ist. Da die Linie 22 die stärkste Krümmung der Scheibenoberfläche darstellen soll ist klar ersichtlich, dass die Krümmung des mit seiner beiden Enden an der Scheibe anliegenden, noch unbelasteten Wischblatts 10 stärker ist als die maximale Scheibenkrümmung (Figur 1). Unter dem Anpressdruck (Pfeil 20) legt sich das Wischblatt 10 mit seiner Wischlippe 24 über seine gesamte Länge an der Scheibenoberfläche 22 an. Dabei baut sich im beispielsweise aus Metall gefertigten, federelastischen Tragelement 12 eine Spannung auf, welche für eine ordnungsgemäße Anlage der Wischleiste 14 beziehungsweise der Wischlippe 24 über deren gesamte Länge an der Scheibe sowie für eine gleichmäßige Verteilung des Anpressdrucks sorgt.

Im Folgenden soll eine erste Ausführungsform des Wischblatts 10 anhand der Figuren 3 und 7 näher erläutert werden. Aus Figur 7 ist ersichtlich, dass das Tragelement 12 des Wischblatts 10 mit einem Abstand 26 vor der zu wischenden Scheibe 22 liegt. Dabei ist dessen Anordnung so getroffen, dass seine Bandflächen 11 beziehungsweise 13 sich in einer Ebene befinden, welche sich im wesentlichen parallel zur zu wischenden Scheibenoberfläche 22 erstreckt. Das Tragelement 12 hat zwei in einer gemeinsamen Ebene liegende bandartige Federschienen 28 und 30, die parallel zueinander ausgerichtet sind. Die einander zugewandten inneren Längskanten 32 befinden sich dabei in einem Abstand 34 voneinander. An jedem der beiden Enden der Federschienen 28, 30 sind diese durch einen brückenartigen Quersteg 36 miteinander verbunden; beispielsweise miteinander verschweißt. Dabei liegt jeder brückenartige Quersteg mit seinen Endabschnitten 40 an der Oberseite 11 des Tragelements 12 beziehungsweise an dessen Federschienen 28, 30 an (Figur 5). Jeder der beiden Querstege 36 hat einen Mittelabschnitt 42 der sich mit einem Abstand 44 von der oberen Bandfläche 11 der Federschienen befindet und der damit deren brückenartige Gestalt begründet. Da die auch als Brückenweite zu bezeichnende Längserstreckung 46 der Mittelabschnitte 42 größer ist als der Abstand 34 zwischen den einander zugewandten inneren Längskanten 32, erstrecken sich die beiden Federschienen 28 und 30 mit inneren Randstreifen 48 in den Bereich der Mittelabschnitte 42, wobei die Randstreifen 48 mit einem Abstand 44 unterhalb von den Mittelabschnitten 42 angeordnet sind. Neben den schon erwähnten Aufgaben des Tragelements 12 hinsichtlich der Auflagekraftverteilung soll dieses auch eine vorschriftsmäßige, spannungsfreie Führung der Wischleiste 14 und damit auch einen geräuscharmen Wischbetrieb sicherstellen. Dies wird auch durch die nachfolgend beschriebene maßliche Abstimmung zwischen dem Tragelement 12 und der Wischleiste 14 erreicht.

Die Wischleiste 14 dieser ersten Ausführungsform hat einen Querschnitt, der anhand der Figuren 3 und 7 deutlich gemacht werden soll. Sie hat eine Kopfleiste 50, mit der die die eigentliche Wischarbeit übernehmende Wischlippe 24 über eine schmale Stegleiste 52 verbunden ist. Die Anordnung der Stegleiste 52 ermöglicht ein Kippen der Wischlippe 24 während der Wischbewegung in eine dem Fachmann bekannte, die Wischarbeit fördernde Schlepplage. Die Kopfleist 50 ist an ihren einander gegenüberliegenden Längsseiten mit zu diesen Längsseiten randoffenen Längsnuten 54 und 56 versehen. Die Längsnuten 54 und 56 dienen zur Aufnahme der inneren Randstreifen 48 der Federschienen 28 und 30. Die Tiefe der Längsnuten, 54 und 56 ist so gewählt, dass zwischen den beiden Längsnuten eine Wand 58 verbleibt. Die Kopfleiste 50 hat somit eine Grundleiste 60 und eine Deckleiste 62, die beide durch die Wand 58 miteinander verbunden sind. Die Dicke 64 der Wand 58 ist kleiner als der Abstand 34 zwischen den inneren Längskanten 32 der Federschienen 28, 30 beziehungsweise kleiner als der Abstand zwischen den inneren Randstreifen 48. Die Breite der beide Längsnuten 54 und 56 in der Kopfleiste 50 ist so auf die Dicke der Federschienen 28, 30 beziehungsweise deren inneren Randstreifen 48 , abgestimmt, dass eine spannungsfreie Halterung der Wischleiste 14 am Tragelement 12 gewährleistet ist, wenn die Wischleiste mit dem Tragelement 12 zusammen gebaut ist (Figuren 3 und 7). Da auch die Breite 66 der Deckleiste 62 etwas kleiner ist als die Brückenweite 46 des Mittelabschnitts 42 und deren Dicke 68 geringer ist als der Abstand 44 zwischen dem Mittelabschnitt 42 und den Oberseiten 11 der Federschienen 28, 30 kann die kostengünstig im Extrusionsverfahren hergestellte, über ihre gesamte Längserstreckung eine gleichbleibenden Querschnitt aufweisende Wischleiste 14 ohne Schwierigkeiten in Längsrichtung in das Tragelement 12 eingeschoben und so spannungsfrei mit diesem verbunden werden.

Das im Mittelabschnitt des Wischblatts 10 angeordnete Teil 16 der Anschlußvorrichtung für den Wischerarm umgreift die jeweiligen äußeren, aus den Längsnuten 54 und 56 ragenden äußeren Randstreifen 72 der Federschienen 28, 30 beziehungsweise des Tragelements 12 (Fig. 2). Die Verbindung zwischen dem Teil 16 und dem Tragelement 12 kann form- und/oder kraftschlüssig sein. Auch eine Schweißverbindung wie für die Querstege 36 ist denkbar. Das Teil 16 der Anschlußvorrichtung bildet somit wie die endseitigen Querstege 36 einen mittleren Quersteg, welcher - wie die Querstege 36 - ebenfalls zur Stabilisierung des Wischblatts beiträgt und darüber hinaus die Verbindung zwischen dem Wischerarm 18 und dem Wischblatt 10 ermöglicht. Bei einer entsprechenden Länge des Wischblatts 10 kann es auch zweckmäßig sein, wenn zwischen den beiden endseitig angeordneten Querstegen 36 weitere entsprechende Querstege angeordnet sind. Zur Vermeidung von Verletzungen im Umgang mit dem Wischblatt insbesondere durch den Endverbraucher ist an den beiden Federschienen 28, 30 beziehungsweise an den endseitigen Querstegen 36 eine vorzugsweise aus Kunststoff gefertigte Abdeckkappe 70 angeordnet, vorzugsweise aufgerastet (Figuren 1 und 2).

Wie vorstehend schon erwähnt, soll die Wischleiste 14 spannungsfrei am Tragelement 12 geführt sein, damit sich die Wischlippe 24 während des Wischbetriebs dem sich ändernden Krümmungsverlauf der Scheibenoberfläche 22 anpassen kann. Um zu vermeiden, dass die Wischlippe 14 dabei nicht in Längsrichtung aus den Federschienen 28, 30 des Tragelements 12 herauswandern kann, ist das Tragelement an einem der Querstege 36 mit Haltemitteln versehen, welche vorzugsweise aus nach dem Einschieben der Wischleiste 14 in das Tragelement 12 mit der Wischleiste in Wirkverbindung gebracht werden.

Bei einem ersten Ausführungsbeispiel der Erfindung (Figuren 3 bis 5) weisen diese Haltemittel einen zungenartigen Fortsatz 74 auf, welcher einstückig mit dem Mittelabschnitt 42 des aus einen Metall gefertigten Quersteg 36 verbunden ist. Der Fortsatz 74 erstreckt sich vom Mittelabschnitt 42 aus zum anderen Endabschnitt der beiden Federschienen 28, 30. An seinem freien Ende hat der Fortsatz 74 einen als Fixiermittel für die Wischleiste 14 dienenden, zur Deckleiste 62 gerichteten Vorsprung 76, der an seinem freien Ende 78 schneidenartig ausgebildet ist. Vor der Montage des Wischblatts ist der Fortsatz 74 so weit aus der Ebene seines Mittelabschnitts 42 herausgebogen, dass die Verlängerung des brückenartigen Durchgangs zwischen Federschienen 28, 30 und dem Mittelabschnitt 42 frei (vergleiche Figuren 4a und Figur 5) und somit die Montage der Wischleiste 14 durch Einschieben in das Tragelement 12 problemlos möglich ist. Wenn diese ihre vorschriftsmäßige Position gegenüber dem Tragelement 12 erreicht hat, wird der Fortsatz 74 in Richtung des Pfeiles 80 gebogen, so dass der Vorsprung 76 mit seiner Schneide 78 in die Deckleiste 62 der Wischleiste 14 eindringt - hineinschneidet oder elastisch verformt - und die Wischleiste fixiert (Figur 4). Die Haltemittel 74, 76, 78 sind also nach dem Positionieren der Wischleiste am Tragelement in ihre Sicherungsposition bringbar. Eine solche Fixierung erfolgt zweckmäßig nur an einem Punkt, damit eine optimale Anpassung der Wischleiste an die sich ändernde Scheibenkrümmung gewährleistet ist. Die Darstellung in Figur 5 zeigt das in Figur 3 gezeigte Ende des Tragelements 14 - also ohne die Wischleiste 14 - jedoch in Gegenrichtung gesehen. Der am anderen Ende des Tragelements vorhandene Quersteg - in Figur 2 durch die Abdeckkappe 70 verdeckt - hat aus vorerwähntem Grund keine Haltemittel zum Sichern der Wischleiste am Tragelement. Selbstverständlich ist der in Figur 2 gezeigte Quersteg 36 mit seinem Fortsatz 74 beim fertigen Wischblatt ebenfalls durch eine Kappe 70 abgedeckt (vergleiche Figur 1).

Für besondere Anwendungen der Erfindung kann gemäß einer in Figur 6 dargestellten anderen Ausführungsform der Erfindung der im Grundaufbau mit dem oben erläuterten Quersteg 36 identische Quersteg 136 beziehungsweise dessen zungenartiger Fortsatz 174 mit mehreren, hier mit zwei Vorsprüngen 175, 176 versehen werden, deren freie Enden 177, 178 ebenfalls schneidenartig ausgebildet sind. Die Funktion dieser Haltemittel entspricht völlig der Funktion der Haltemittel gemäß den Figuren 3 bis 5.

In beiden Fallbeispielen sind am Tragelement 12 bzw. an einem zu diesem gehörenden Quersteg 36 Haltemittel 74, 76, 78 beziehungsweise 174, 175, 176, 177, 178 angeordnet, welche zum Sichern der Wischleiste 14 an dem Tragelement 12 in dessen Längsrichtung dienen. Da - wie schon dargelegt - das Teil 16 der Anschlußvorrichtung ebenfalls ein Quersteg des Tragelements darstellt, ist es denkbar entsprechende Haltemittel an dem Teil 16 anzuordnen.

Die Haltemittel können anstelle der relativ steifen Fortsätze 74 beziehungsweise 174 auch durch elastisch auslenkbare Zungen gebildet sein, welche gegen Federkraft aus ihrer Sicherungsstellung vorübergehend auslenkbar sind. An die Stelle des Vorsprungs und der Schneide könnten durchaus auch krallen- oder widerhakenartige Ausgestaltungen der Haltemittel treten.

## Patentansprüche

1. Wischblatt für Scheiben insbesondere von Kraftfahrzeugen mit einer langgestreckten, gummielastischen, an der Scheibe (22) anlegbaren Wischleiste (14), die hauptsächlich längsachsenparallel an einer Unterseite (13) eines langgestreckten federelastischen Tragelement (12) angeordnet ist, mit welchem an einer Oberseite (11) ein zu einer Vorrichtung zum Anschließen des Wischblatts (10) an einem angetriebenen Wischerarm (18) gehörendes Bauteil (16) direkt verbunden ist, wobei das Tragelement (12) bandartige Federschienen (28, 30) hat, deren einander benachbarten inneren Längskanten (32) mit Abstand von einander liegend in jeweils eine jeder Längskante zugeordnete, zur Längsseite der Wischleiste offenen Längsnut (54, 56) eintauchen und durch wenigstens zwei in Längsrichtung mit Abstand voneinander angeordnete Querstege (36) und das Bauteil (16) miteinander verbunden sind, wobei wenigstens ein Quersteg (36) und das Bauteil (16) einen Mittelabschnitt (42) hat, der sich mit Abstand von den oberen Bandflächen (11) der Federschienen (28, 30) erstreckt, so dass sich wenigstens ein brückenartiger Quersteg ergibt, wobei insbesondere der Abstand (34) zwischen den beiden Federschienen kleiner ist als die Brückenweite (46) und dass an dem Tragelement (12) Haltemittel (74, 76, 78, 174, 175, 176, 177, 178) zum Sichern der Wischleiste (14) an dem Tragelement (12) in dessen Längsrichtung angeordnet sind, und wobei das Bauteil (16) der Anschlußvorrichtung ebenfalls ein Quersteg des Tragelements darstellt, **dadurch gekennzeichnet, dass** die Federschienen (28, 30) fest mit den Querstegen (36) und das Bauteil (16) verbunden sind und in das mit den Querstegen (36) und dem Bauteil (16) vorgefertigte Tragelement (12) die Wischleiste (14) eingeschoben, spannungsfrei verbunden und mittels der an den Querstegen (36) oder dem Bauteil (16) angeordneten Haltemittel (74, 76, 78, 174, 175, 176, 177, 178) gesichert ist, die nach dem Einschieben mit der Wischleiste (14) in Wirkverbindung bringbar sind.

2. Wischblatt nach Anspruch 1, **dadurch gekennzeichnet, dass** an den endseitigen Querstegen (36) vorzugsweise aus Kunststoff gefertigte Abdeckkappen angeordnet, vorzugsweise aufgerastet sind.

3. Wischblatt nach einem der Ansprüche 1 oder 2, **dadurch gekennzeichnet, dass** die Haltemittel (74, 76, 78 beziehungsweise 174, 175, 176, 177, 178) an einem der Querstege (36 bzw. 16) angeordnet sind.

4. Wischblatt nach einem der Ansprüche 1 bis 3, **dadurch gekennzeichnet, dass** die Haltemittel an einem Quersteg (36) angeordnet sind, der sich im Bereich eines der Endabschnitte der beiden Federschienen (28, 30) befindet.

5. Wischblatt nach Anspruch 4, **dadurch gekennzeichnet, dass** die Haltemittel einen zungenartigen Fortsatz (74 beziehungsweise 174) aufweisen, welcher sich vom Mittelabschnitt (42) des einen Querstegs (36) aus zum anderen Endabschnitt der beiden Federschienen erstreckt.

6. Wischblatt nach Anspruch 5, **dadurch gekennzeichnet, dass** der zungenartige Fortsatz (74 beziehungsweise 174) mit Fixiermitteln (78 beziehungsweise 177, 178) an einer Deckleiste (62) der Wischleiste (14) angreift, welche sich oberhalb der beiden Längsnuten (54, 56) und auch oberhalb der oberen Bandflächen (11) der Federschienen (28, 30) befindet.

7. Wischblatt nach Anspruch 5, **dadurch gekennzeichnet, dass** der zungenartige Fortsatz als Fixiermittel wenigstens einen zur Deckleiste (62) der Wischleiste (14) gerichteten Vorsprung hat.

8. Wischblatt nach Anspruch 7, **dadurch gekennzeichnet, dass** der Vorsprung (76) an seinem freien Ende schneidenartig ausgebildet ist.

9. Wischblatt nach einem der Ansprüche 7 oder 8, **dadurch gekennzeichnet, dass** als Fixiermittel an dem zungenartigen Fortsatz (174) mehrere zur Deckleiste (62) gerichtete Vorsprünge (175, 176) angeordnet sind.

10. Wischblatt nach einem der Ansprüche 5 bis 9, **dadurch gekennzeichnet, dass**,sowohl die Querstege (36) als auch der mit einem der Querstege einstückig verbundene zungenartige Fortsatz (74 beziehungsweise 174) aus Metall gefertigt sind.

## Claims

1. Wiper blade for glazed surfaces, especially in motor vehicles, having an elongate, rubber-elastic wiper strip (14), which can be placed against the glazed surface (22) and is arranged primarily parallel to the longitudinal axis on a lower side (13) of an elongate, spring-elastic supporting element (12), to which, on an upper side (11), a component (16) belonging to a device for connecting the wiper blade (10) to a driven wiper arm (18) is directly connected, the supporting element (12) having band-like spring rails (28, 30), the mutually adjacent, inner longitudinal edges (32) of which, situated at a distance from each other, dip into a respective longitudinal groove (54, 56), which is assigned to each longitudinal edge and is open to the longitudinal side of the wiper strip, and are connected to each other by at least two transverse webs (36), which are arranged at a distance from one another in the longitudinal direction, and by the component (16), at least one transverse web (36) and the component (16) having a central section (42) which extends at a distance from the upper end surfaces (11) of the spring rails (28, 30), so that at least one bridge-like transverse web is produced, with, in particular, the distance (34) between the two spring rails being smaller than the bridge width (46) and so that retaining means (74, 76, 78, 174, 175, 176, 177, 178) for securing the wiper strip (14) on the supporting element (12) in the longitudinal direction thereof are arranged on the supporting element (12), and the component (16) of the connecting device likewise constituting a transverse web of the supporting element, **characterized in that** the spring rails (28, 30) are connected fixedly to the transverse webs (36) and the component (16) and the wiper strip (14) is pushed into the supporting element (12), which is premanufactured together with the transverse webs (36) and the component (16), is connected thereto in a stress-free manner and is secured by means of the retaining means (74, 76, 78, 174, 175, 176, 177, 178), which are arranged on the transverse webs (36) or the component (16) and, after the pushing-in process, can be brought into operative connection with the wiper strip (14).

2. Wiper blade according to Claim 1, **characterized in that** covering caps which are preferably manufactured from plastic are arranged on, preferably snapped onto, the end-side transverse webs (36).

3. Wiper blade according to either of Claims 1 and 2, **characterized in that** the retaining means (74, 76, 78 or 174, 175, 176, 177, 178) are arranged on one of the transverse webs (36 or 16).

4. Wiper blade according to one of Claims 1 to 3, **characterized in that** the retaining means are arranged on a transverse web (36) which is situated in the region of one of the end sections of the two spring rails (28, 30).

5. Wiper blade according to Claim 4, **characterized in that** the retaining means have a tongue-like extension (74 or 174) which extends from the central section (42) of the one transverse web (36) to the other end section of the two spring rails.

6. Wiper blade according to Claim 5, **characterized in that** the tongue-like extension (74 or 174) engages with fixing means (78 or 177, 178) on a top strip (62) of the wiper strip (14), which top strip is situated above the two longitudinal grooves (54, 56) and also above the upper band surfaces (11) of the spring rails (28, 30).

7. Wiper blade according to Claim 5, **characterized in that** the tongue-like extension has, as fixing means, at least one projection directed towards the top strip (62) of the wiper strip (14).

8. Wiper blade according to Claim 7, **characterized in that** the projection (76) is designed at its free end in the manner of a cutting edge.

9. Wiper blade according to either of Claims 7 and 8, **characterized in that**, as fixing means, a plurality of projections (175, 176) which are directed towards the top strip (62) are arranged on the tongue-like extension (174).

10. Wiper blade according to one of Claims 5 to 9, **characterized in that** the transverse webs (36) and the tongue-like extension (74 or 174), which is connected integrally to one of the transverse webs, are manufactured from metal.

## Revendications

1. Balai d'essuie-glace pour vitres, en particulier de véhicules automobiles, comportant une lame d'essuie-glace (14) longitudinale, en caoutchouc élastique, pouvant être montée au niveau de la vitre (22), qui est disposée principalement parallèlement à un axe longitudinal au niveau d'une face inférieure (13) d'un élément de support (12) élastique souple, longitudinal, relié au niveau d'une face supérieure (11) directement à un composant (16) d'un dispositif permettant de raccorder le balai d'essuie-glace (10) à un bras d'essuie-glace (18) entraîné, l'élément de support (12) possédant des rails souples (28, 30) en forme de bande dont les arêtes longitudinales (32) intérieures adjacentes viennent à distance l'une de l'autre, dans une rainure longitudinale (54, 56) ouverte vers le côté longitudinal de la lame et associée à chaque arête longitudinale, et elles sont reliées par le composant (16) et d'au moins deux traverses (36) disposées à distance l'une de l'autre en direction longitudinale, au moins une traverse (36) et le composant (16) possédant une section médiane (42) qui s'étend à distance des surfaces de bande supérieures (11) des rails souples (28, 30), formant au moins une traverse en pont, la distance (34) entre les deux rails souples étant inférieure à la largeur de pont (46), et au niveau de l'élément de support (12), des moyens de retenue (74, 76, 78, 174, 175, 176, 177, 178) fixent la lame (14) à l'élément de support (12) dans sa direction longitudinale, le composant (16) du dispositif de raccordement représentant également une traverse de l'élément de support,
**caractérisé en ce que**
les rails souples (28, 30) sont reliés fixement aux traverses (36) et au composant (16), et la lame (14) est insérée, reliée sans tension et fixée, à l'aide des moyens de retenue (74, 76, 78, 174, 175, 176, 177, 178) disposés au niveau des traverses (36) ou du composant (16), dans l'élément de support (12) préfabriqué avec les traverses (36) et le composant (16), les moyens de retenue pouvant être amenés en liaison active avec la lame (14) après l'insertion.

2. Balai d'essuie-glace selon la revendication 1,
**caractérisé en ce que**
des capuchons de fermeture fabriqués de préférence en matière plastique sont disposés, de préférence encliquetés, au niveau des traverses (36) d'extrémité.

3. Balai d'essuie-glace selon l'une quelconque des revendications 1 ou 2,
**caractérisé en ce que**
les moyens de retenue (74, 76, 78 ou 174, 175, 176, 177, 178) sont disposés au niveau de l'une des traverses (36 ou 16).

4. Balai d'essuie-glace selon l'une quelconque des revendications 1 à 3,
**caractérisé en ce que**
les moyens de retenue sont disposés au niveau d'une traverse (36) située dans la zone de l'une des sections d'extrémité des deux rails souples (28, 30).

5. Balai d'essuie-glace selon la revendication 4,
**caractérisé en ce que**
les moyens de retenue présentent un appendice (74 ou 174) en forme de languette, qui s'étend de la section médiane (42) de la première traverse (36) vers l'autre section d'extrémité des deux rails souples.

6. Balai d'essuie-glace selon la revendication 4,
**caractérisé en ce que**
l'appendice (74 ou 174) en forme de languette s'accroche avec des moyens de fixation (78 ou 177, 178) à une baguette de recouvrement (62) de la lame d'essuie-glace (14) située au-dessus des deux rainures longitudinales (54, 56) et également au-dessus des surfaces de bande supérieures (11) des rails souples (28, 30).

7. Balai d'essuie-glace selon la revendication 5,
**caractérisé en ce que**
l'appendice en forme de languette possède en tant que moyen de fixation au moins une saillie orientée vers la baguette de recouvrement (62) de la lame d'essuie-glace (14).

8. Balai d'essuie-glace selon la revendication 7,
**caractérisé en ce que**
la saillie (76) est configurée au niveau de son extrémité libre en forme de lame (14).

9. Balai d'essuie-glace selon l'une quelconque des revendications 7 ou 8,
**caractérisé en ce que**
plusieurs saillies (175, 176) sont orientées vers la baguette de recouvrement (62) au niveau de l'appendice (174) en forme de languette, en tant que moyens de fixation.

10. Balai d'essuie-glace selon l'une quelconque des revendications 5 à 9,
**caractérisé en ce que**
les traverses (36) et l'appendice (74 ou 174) en forme de languette reliés d'un seul tenant à l'une des traverses sont en métal.
